# EUROPEAN PATENT APPLICATION

(11) **EP 4 800 972 A1**
(43) Date of publication of application: **02.09.2026**
(21) Application number: 26160126.4
(22) Date of filing: 23.02.2026
(51) Int. Cl.: H04L 9/08

(54) **METHOD OF MONITORING AN ENCRYPTED MESSAGE**

(30) Priority: 28.02.2025 IT 202500004185
(71) Applicant: Vodafone Group Services Limited, Newbury RG14 2FN (GB)
(72) Inventor: SCALONE, Gianpaolo Angelo, London, W2 6BY (GB)
(74) Representative: Boult Wade Tennant LLP

(57) **Abstract**

A method of monitoring an encrypted message received by a computing device using an application is provided. The method comprises the computing device receiving an encrypted message comprising cryptographic handshake data. The application determines a cryptographic algorithm of the encrypted message based on the cryptographic handshake data. The application determines whether the encrypted message is quantum-secure based on the determined cryptographic algorithm. The application generates an indication on the computing device that the encrypted message is quantum secure or an indication on the computing device that the encrypted message is not quantum secure.

## Description

### Field of the disclosure

The present disclosure relates to cryptographic protocols. In particular, the present disclosure relates to cryptographic protocols which are resistant to brute-force attacks.

### Background

The advent of quantum computing represents a significant increase in the availability of computational power. This poses a challenge for classical cryptographic protocols such as RSA and ECC, which may be vulnerable to brute-force attacks enabled by a quantum computer. To mitigate this, post-quantum cryptographic (PQC) algorithms are being developed and integrated into Transport Layer Security (TLS) and other secure communication protocols. For example, post-quantum TLS cryptographic protocols are being tested and implemented (e.g., NIST PQC standardization efforts, Cloudflare's PQ hybrid TLS, Microsoft Edge's CECPQ2 integration).

Currently, the use of post-quantum TLS cryptographic protocols is not widespread. As such, it may be challenging for a user to determine whether a network connection is vulnerable to a quantum-computer driven attack.

### Summary

According to a first aspect of the disclosure, a method of monitoring an encrypted message received by a computing device using an application is provided. The method comprises the computing device receiving an encrypted message comprising cryptographic handshake data. The application determines a cryptographic algorithm of the encrypted message based on the cryptographic handshake data. The application determines whether the encrypted message is quantum-secure based on the determined cryptographic algorithm. The application generates an indication on the computing device that the encrypted message is quantum secure or an indication on the computing device that the encrypted message is not quantum secure.

In general, a web browser does not provide any indication of the cryptographic algorithm which may be being used by the web browser/internet connection to encrypt messages received/transmitted by the computing device. Moreover, it is not straightforward for a user to realise whether or not the cryptographic algorithm may be vulnerable to quantum-computing powered attacks (e.g. a brute force attack) to break the encryption. The application according to this disclosure generates an indicator for a user of the computing device to reassure a user when the cryptographic algorithm is resistant to quantum-computing powered attacks (e.g. resistant to brute force attacks). Such cryptographic algorithms are considered to be "quantum-secure". Similarly, the application will also alert a user when the cryptographic algorithm used may be vulnerable to a quantum computing powered attack (i.e. a cryptographic algorithm which is not quantum-secure).

Accordingly, the first aspect of the disclosure provides method for monitoring and indicating quantum-safe encryption for applications such as web browser connections, thereby allowing users to assess the security level of their communications effectively.

In some embodiments, the application determining whether the encrypted message is quantum-secure based on the determined cryptographic algorithm comprises the application comparing the determined list of quantum secure algorithms to a list of quantum-secure cryptographic algorithms. The list of quantum-secure algorithms may be stored in a memory of the computing device. The list of quantum-secure algorithms may be updated regularly, or cross-referenced with an externally held list of quantum-secure algorithms in order to maintain the performance of the application.

In some embodiments, the list of quantum-secure cryptographic algorithms may be stored on a cloud computing device which is accessed by the application. As such, the application may obtain an up to list of quantum-secure algorithms such that the determination of a quantum safe cryptographic algorithm may be made using real-time information.

In some embodiments, the list of quantum-secure cryptographic algorithms includes a sub-list of hybrid quantum-secure algorithms. According to this disclosure, hybrid quantum-secure algorithms are understood to be algorithms which are resistant to brute-force attacks (as per quantum-secure algorithms) and are also resistant to conventional attacks. Examples of hybrid quantum-secure algorithms include algorithms which combine classical key exchange algorithms (RSA, ECDH) with post-quantum schemes (Kyber ML-KEM, QKD). In some embodiments, the application may generate an indication on the computing device to indicate that the cryptographic algorithm is a hybrid quantum-secure algorithm which is distinct from the indication used to indicate that the cryptographic algorithm is quantum-secure (e.g. an algorithm which may not incorporate a classical key exchange algorithms for example).

In some embodiments, the application determining whether the encrypted message is quantum-secure based on the determined cryptographic algorithm comprises providing the determined cryptographic algorithm and/or the cryptographic handshake data to an artificial intelligence tool. The artificial intelligence tool may determine whether the message is quantum-secure based on the determined cryptographic algorithm and/or the cryptographic handshake data.

In some embodiments, the indication that the encrypted message is quantum secure or not comprises a visual indicator which is displayed on a user interface of an application. For example, the visual indicator may comprise one or more of: a colour, a logo, a pop-up box, mouseover text and the like. As such, the application may modify a user interface of the computing device using the visual indicator. Different logos, colours, pop-up boxes and/or mouseover text may be used to highlight the difference between a quantum secure algorithm and a non-quantum secure algorithm. In some embodiments, the visual indicator used to indicate a non-quantum secure algorithm may have increased prominence, relative to the indicator used to indicate a quantum secure algorithm. For example, the visual indicator used to indicate a non-quantum secure algorithm may have increased size, have an associated animation (e.g. flashing), or a prominent logo or colour.

In some embodiments, the indication that the encrypted message is quantum secure or not comprises an audio indicator which is output by a user interface of an application. In particular, an audio indicator may be sounded by the computing device when a non-quantum secure algorithm is determined by the application, in order to highlight this to a user of the computing device.

In some embodiments, the application may comprise a web browser, a browser extension, or a plug-in application (e.g. for a web browser). For example the application may comprise a web browser for a mobile device or a desktop computing device.

In some embodiments, the application may determine whether the determined cryptographic algorithm complies with a current standard for the determined cryptographic algorithm based on the cryptographic handshake data and a list of standards for cryptographic algorithms. Where the application determines that the cryptographic algorithm does not comply with the current standard for the determined cryptographic algorithm, the application may generate an indication. For example, the indication may be the indication that the encrypted message is not quantum secure, or it may be a different indication (e.g. that an update is required to the cryptographic algorithm).

According to a second aspect of the disclosure, an application for a computer is provided. The application is configured to receive an encrypted message comprising cryptographic handshake data. The application is configured to determine a cryptographic algorithm of the encrypted message based on the cryptographic handshake data. The application is configured to determine whether the encrypted message is quantum-secure based on the determined cryptographic algorithm. The application is configured to generate an indication that the encrypted message is quantum secure or an indication that the encrypted message is not quantum secure.

As such, it will be appreciated that the application of the second aspect may be used to perform the method of the first aspect. Thus, the application of the second aspect may incorporate any of the optional features and associated advantages of the first aspect.

In some embodiments, the application being configured to determine whether the encrypted message is quantum-secure based on the determined cryptographic algorithm may comprise the application being configured to compare the determined list of quantum secure algorithms to a list of quantum-secure cryptographic algorithms.

In some embodiments, the application may be configured to obtain the list of quantum-secure cryptographic algorithms from a cloud computing device.

In some embodiments, the application being configured to determine whether the encrypted message is quantum-secure based on the determined cryptographic algorithm may comprise the application providing the determined cryptographic algorithm and/or the cryptographic handshake data to an artificial intelligence tool. In some embodiments, the artificial intelligence tool may be configured to determine whether the encrypted message is quantum-secure based on the determined cryptographic algorithm and/or the cryptographic handshake data.

In some embodiments, the indication that the encrypted message is quantum secure or not may comprise a visual indicator which is displayed on a user interface of the application. In some embodiments, the indication that the encrypted message is quantum secure or not may comprise an audio indicator which is output by a user interface of the application.

In some embodiments, the application may be a web browser or a plug-in application for a web browser.

In some embodiments, the application may be configured to determine whether the determined cryptographic algorithm complies with a current standard for the determined cryptographic algorithm based on the cryptographic handshake data and a list of standards for cryptographic algorithms.

### Brief description of the figures

Embodiments of the disclosure will now be described with reference to the following nonlimiting figures in which:
- Fig. 1 is a flow chart of a method according to an embodiment of the disclosure
- Fig. 2 is a view of a user interface of an application showing an indicator according to an embodiment of the disclosure; and
- Fig. 3 is a further view of a user interface of an application showing an indicator according to an embodiment of the disclosure.

### Detailed description

According to an embodiment of the disclosure, an application for a computing device is provided. The application is configured to determine whether an encrypted message received by the computer is encrypted with a quantum-secure algorithm.

The application may be a computer program which may be executed on any suitable computing device. The application may comprise instructions which are stored on a memory of the computing device (or at least a memory which is accessible by the computing device). For example, the computing device may comprise a desktop computer, a laptop computer, a smartphone, a tablet device, smart watch and the like.

The application may be any application which receives an encrypted message, or has access to encrypted messages received by the computing device. For example, the application may comprise a web browser, an application for a mobile device (e.g. a smartphone app) and the like. In some embodiments, the application may comprise a plug-in, or browser extension, for a web browser. As such, the application according to this disclosure may be an open-source extension to a web browser or be or natively embedded in a web browser. In some embodiments, the web browser may transmit and receive encrypted messages via a Transport Layer Security (TLS) protocol and the like.

The application according to this disclosure generates an indicator for a user of the computing device to reassure a user when the cryptographic algorithm used to encrypt the encrypted message is "quantum-safe". According to this disclosure, a cryptographic algorithm which is considered "quantum-safe" is a cryptographic algorithm designed to resist attacks from quantum computers. Unlike classical encryption methods that can be broken by Shor's algorithm, quantum safe algorithms rely on mathematical problems that remain challenging to solve even for quantum computers.

Shor's algorithm is a quantum algorithm developed by Peter Shor in 1994 that efficiently factorizes large integers and solves discrete logarithm problems. Consequently Shor's algorithm is part of the foundation of many classical encryption algorithms.

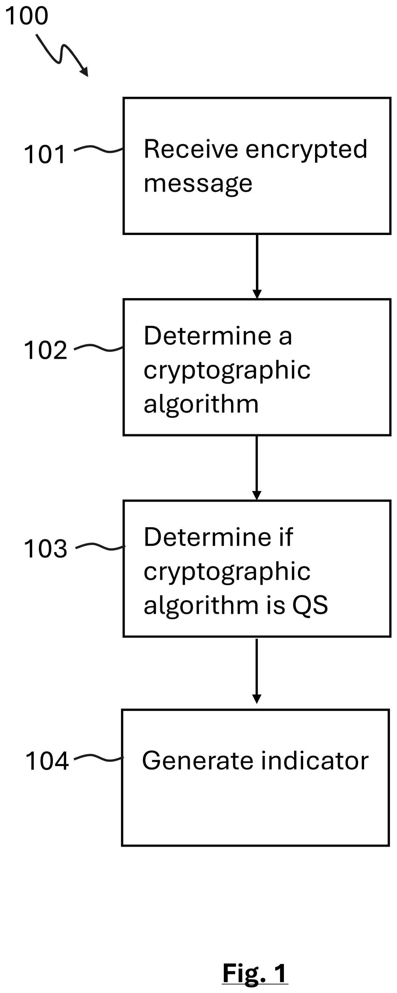

A method 100 of monitoring the encryption of an encrypted message will now be described with reference to Fig. 1. The method may be performed by an application operating on a computing device as discussed above.

In step 101, the computing device receives an encrypted message comprising cryptographic handshake data. The application may obtain the cryptographic handshake data from the computing device, or may have access to the encrypted message and handshake data directly. As such, the application may be configured to intercept and analyse information from an encrypted message. In some embodiments, the application obtains Transport Layer Security (TLS) handshake data from the computing device in relation to the encrypted message. Such metadata is typically generated when a computing device establishes an initial connection with a website for example.

In step 102, the application determines a cryptographic algorithm of the encrypted message based on the cryptographic handshake data. For example, the cryptographic handshake data obtained may include information indicative of the cryptographic algorithm. Alternatively, the application may identify the cryptographic algorithm based on knowledge of different cryptographic algorithms stored in a memory of the computing device.

In step 103, the application determines whether the encrypted message is quantum-secure based on the determined cryptographic algorithm. For example, in some embodiments, the application may determine whether the encrypted message is quantum-secure based on by comparing the determined cryptographic algorithm to a list of quantum-secure cryptographic algorithms. In some embodiments, the list of quantum-secure cryptographic algorithms is stored on a cloud computing device which is accessed by the application. By storing the list of quantum-safe algorithms in the cloud, the list may be updated in real-time. Thus, by regularly updating the cloud-based list of quantum-secure cryptographic algorithms, the application may ensure compliance with evolving quantum cryptographic standards.

In some embodiments, the list of quantum-secure cryptographic algorithms may be stored on a memory of the computing device which is accessible by the application. The stored list may also be updated a regularly intervals to ensure compliance with evolving quantum cryptographic standards. In some embodiments, the stored list may also include a list of known cryptographic algorithms which are not quantum safe.

Examples of known cryptographic algorithms which are not quantum-safe comprise algorithms based on public-key cryptography, Symmetric Cryptography, or hash functions.

Public-key cryptography algorithms may rely on integer factorization, discrete logarithms, or elliptic curve logarithms, all of which can be efficiently solved by quantum computers. Examples of such algorithms include RSA (Rivest-Shamir-Adleman), DSA (Digital Signature Algorithm), DH (Diffie-Hellman Key Exchange), ECDH (Elliptic Curve Diffie-Hellman), ECDSA (Elliptic Curve Digital Signature Algorithm), EdDSA (Edwards-curve Digital Signature Algorithm), ElGamal, Schnorr Signatures, and MQV (Menezes-Qu-Vanstone key agreement protocol).

Symmetric encryption algorithms may be generally more resistant to quantum attacks, but Grover's algorithm reduces security strength by half (e.g., a 128-bit key becomes as strong as a 64-bit key). Examples of such algorithms include: AES-128 (Advanced Encryption Standard), 3DES (Triple Data Encryption Standard), DES (Data Encryption Standard), Blowfish, CAST-128, RC4 (Rivest Cipher 4), RC5, and RC6.

While some hash function-based cryptographic algorithms may not be directly vulnerable to quantum computers, Grover's algorithm speeds up brute-force preimage attacks such that these algorithms may be vulnerable or become vulnerable in the future. Examples of such algorithms include: SHA-1 (currently not quantum-secure), SHA-256 (Security reduced from 128-bit to 64-bit due to Grover's), SHA-512 (Security reduced from 256-bit to 128-bit), MD5 (already vulnerable), RIPEMD-160, and Whirlpool.

Examples of quantum-safe algorithms include algorithms based on publix key cryptography, Quantum-Resistant Symmetric Cryptography, Quantum Resistant Hash Functions, and Hybrid functions. A list of algorithms currently considered to be quantum secure may include:
Lattice-Based Cryptography such as Kyber, Dilithium, Falcon,
NTRUEncrypt, and NTRU-HRSS;
Code-Based Cryptography such as Classic McEliece;
Multivariate Polynomial Cryptography such as Rainbow;
Hash-Based Cryptography such as: SPHINCS+, LMS (Leighton-Micali Signature Scheme) (RFC 8554), XMSS (Extended Merkle Signature Scheme) (RFC 8391);
Symmetric Cryptography algorithms such as AES-256 (Advanced Encryption Standard), Threefish (Part of the Skein hash function), Serpent, Grain-128a, Ascon;
Quantum-Resistant Hash Functions such as: SHA-3, BLAKE3, SHA-512, SPHINCS+ Hash-Based Cryptographic Primitives, Haraka;

In some embodiments, the list of quantum-secure algorithms may include hybrid algorithms. Hybrid solutions combine classical and post-quantum encryption for improved security. In some embodiments, a different indicator may be used to indicate the use of a hybrid algorithm. Examples of Hybrid Cryptography algorithms include algorithms such as Hybrid Kyber + X25519, TLS 1.3 with Kyber + ECDH, Hybrid Falcon + ECDSA

In some embodiments, the application may determine whether the encrypted message is quantum-secure by providing the determined cryptographic algorithm and/or the cryptographic handshake data to an artificial intelligence tool. The artificial intelligence tool may determine whether the message is quantum-secure based on the determined cryptographic algorithm and/or the cryptographic handshake data. For example, an artificial intelligence tool, for example a generative Al model, may analyse if the cryptographic algorithm relies on a math problem that is resistant to quantum computers. The artificial intelligence tool may check the mathematical structure of the cryptographic algorithm and compare it to know quantum vulnerable problems. In some embodiments, the artificial intelligence tool may assess if Shor's or Grover's algorithms can be applied to the cryptographic algorithm. In some embodiments, a generative artificial intelligence model may assess key length efficiency or formally prove that the algorithm is quantum safe by using tools such as Coq, Lean, ProVerif.

In some embodiments, the artificial intelligence tool may simulate quantum attacks to assess if there is a vulnerability. In some embodiments, the artificial intelligence tool may utilise deep learning to find patterns in cryptographic failures and compare new cryptographic algorithms with known weak schemes/cryptographic algorithms to predict potential weakness. For example, the artificial intelligence tool may analyse trends in quantum algorithm advancements to anticipate future trends.

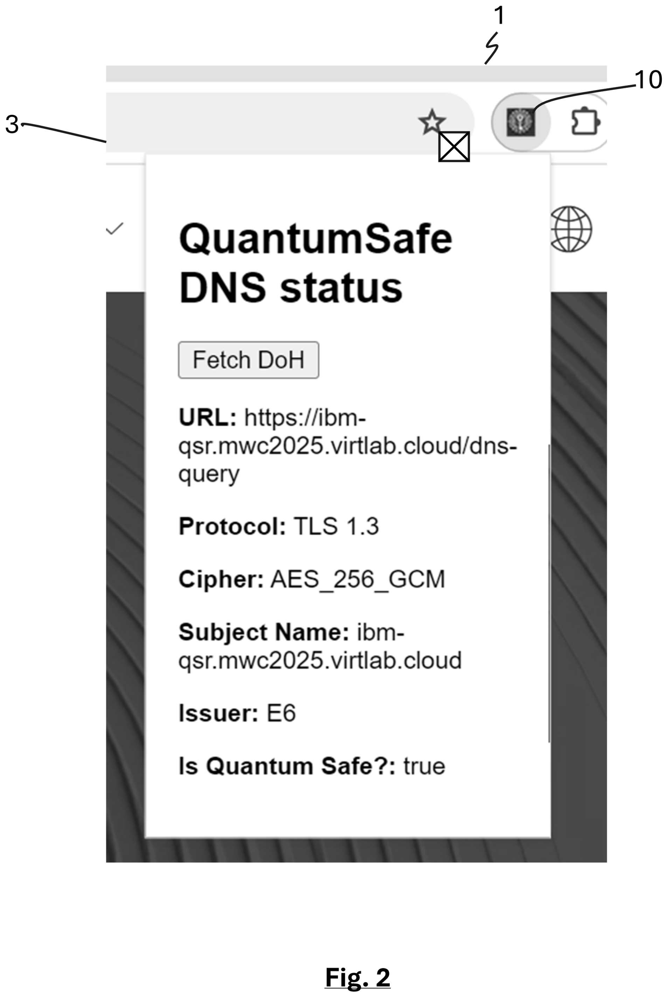

In step 104, the application generates an indication based on whether or not the encrypted message is quantum secure. Fig. 2 shows a screenshot of an application which is a web browser plug-in according to an embodiment of the disclosure. The web browser plug-in is operating on a computing device (e.g. a laptop computer). The screen shot of Fig. 2 shows part of a web browser 1. A visual indicator 10 for the plug-in is located adjacent to the search bar/address bar 3. The visual indicator 10 may display a colour and/or a logo to indicate that the encryption algorithm used by the website to transfer encrypted messages is quantum secure. The logo may comprise a sword, shield, or (locked) padlock and the like. In the embodiment of Fig. 2, a green colour and a key-shaped logo are used to indicate that the encryption algorithm is quantum-secure.

As shown in Fig. 2, the application may also provide additional information about the encryption algorithm and the connection over which encrypted messages are transferred. For example, the application may also obtain information regarding one or more of: the URL, communication protocol, encryption algorithm, subject name, and issuer from the computing device. This information may be displayed to the user upon request, for example upon selecting or highlighting the application.

In some embodiments, the application may also determine whether the determined cryptographic algorithm complies with a current standard for the determined cryptographic algorithm based on the cryptographic handshake data and a list of standards for cryptographic algorithms. In the event that the cryptographic algorithm is non-compliant, for example due to an older standard of the algorithm being used, the application may determine that the cryptographic algorithm is not quantum secure and generate an indicator accordingly. Alternatively, the application may generate a pop-up box or message using the computing device to inform the user that the cryptographic algorithm is not up to date.

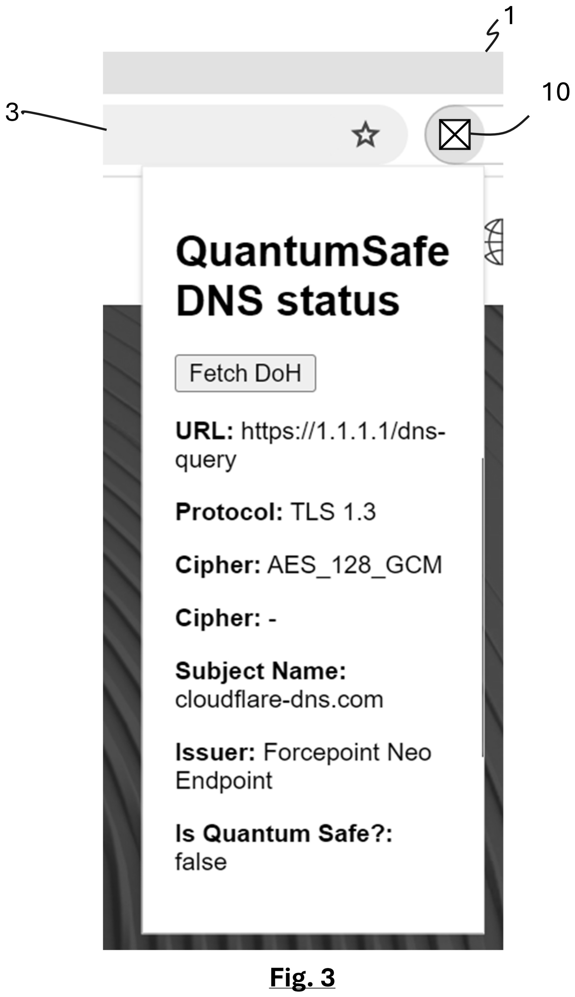

Fig. 3 shows a screenshot of the application of Fig. 2 when the encryption algorithm is not quantum secure. As will be appreciated from Fig. 3, the colour of the visual indicator may change. In some embodiments, the visual indicator 10 may change to a generally red colour to indicate the encryption algorithm is not quantum secure. In some embodiments, the logo displayed may also change. In the example of Fig. 3, an X in a box is used to display a non-quantum secure encryption algorithm, but it will be appreciated than any suitable logo may be used. For example, the quantum-secure logo may be modified (e.g. by overlaying an X and the like) to indicate a different status of the connection.

In some embodiments, the indicator generated may be purely a visual indicator. In some embodiments, the indicator generated may be an audio indicator, or haptic feedback. For example, a vibration of the computing device may be used to indicate that the encryption algorithm is not quantum secure. In some embodiments, the indicator may combine one or more of a visual indicator, an audio indicator, and haptic indicator.

In some embodiments, upon determining that the encryption algorithm is not quantum secure, the application may generate an alert for a user of the computing device. For example, the application may generate a pop-up box or sound an alarm or other audible signal.

Thus, according to this disclosure, a method and application for monitoring an encrypted message is provided.

## Claims

1. A method of monitoring an encrypted message received by a computing device using an application, the method comprising:
the computing device receiving an encrypted message comprising cryptographic handshake data;
the application determining a cryptographic algorithm of the encrypted message based on the cryptographic handshake data; and
the application determining whether the encrypted message is quantum-secure based on the determined cryptographic algorithm,
wherein the application generates an indication on the computing device that the encrypted message is quantum secure or an indication on the computing device that the encrypted message is not quantum secure.

2. The method of claim 1, wherein
the application determining whether the encrypted message is quantum-secure based on the determined cryptographic algorithm comprises the application comparing the determined cryptographic algorithm to a list of quantum-secure cryptographic algorithms.

3. The method claim 2, wherein
the list of quantum-secure cryptographic algorithms is stored on a cloud computing device which is accessed by the application.

4. The method of claim 2 or claim 3, wherein
the list of quantum-secure cryptographic algorithms includes a sub-list of hybrid quantum-secure algorithms.

5. The method of any of claims 1 to 4, wherein
the application determining whether the encrypted message is quantum-secure based on the determined cryptographic algorithm comprises providing the determined cryptographic algorithm and/or the cryptographic handshake data to an artificial intelligence tool,
wherein the artificial intelligence tool determines whether the message is quantum-secure based on the determined cryptographic algorithm and/or the cryptographic handshake data.

6. The method of any of claims 1 to 5, wherein
the indication that the encrypted message is quantum secure or not comprises a visual indicator which is displayed on the computing device; and/or
the indication that the encrypted message is quantum secure or not comprises an audio indicator which is output by the computing device.

7. The method of any of claims 1 to 6, wherein
the application is a web browser or a plug-in application for a web browser.

8. The method of any of claims 1 to 7, further comprising
the application determining whether the determined cryptographic algorithm complies with a current standard for the determined cryptographic algorithm based on the cryptographic handshake data and a list of standards for cryptographic algorithms.

9. An application for monitoring an encrypted message received by a computing device, wherein the encrypted message comprises cryptographic handshake data, wherein
the application is configured to determine a cryptographic algorithm of the encrypted message based on the cryptographic handshake data; and
the application is configured to determine whether the encrypted message is quantum-secure based on the determined cryptographic algorithm,
wherein the application is configured to generate an indication that the encrypted message is quantum secure or an indication that the encrypted message is not quantum secure.

10. The application of claim 9, wherein
the application being configured to determine whether the encrypted message is quantum-secure based on the determined cryptographic algorithm comprises the application being configured to compare the determined list of quantum secure algorithms to a list of quantum-secure cryptographic algorithms.

11. The application of claim 10, wherein
the application is configured to obtain the list of quantum-secure cryptographic algorithms from a cloud computing device.

12. The application of any of claims 9 to 11, wherein
the application being configured to determine whether the encrypted message is quantum-secure based on the determined cryptographic algorithm comprises the application providing the determined cryptographic algorithm and/or the cryptographic handshake data to an artificial intelligence tool,
wherein the artificial intelligence tool is configured to determine whether the encrypted message is quantum-secure based on the determined cryptographic algorithm and/or the cryptographic handshake data.

13. The application of any of claims 9 to 12, wherein
the indication that the encrypted message is quantum secure or not comprises a visual indicator which is displayed on a user interface of the application; and/or
the indication that the encrypted message is quantum secure or not comprises an audio indicator which is output by a user interface of the application.

14. The application of any of claims 1 to 13, wherein
the application is a web browser or a plug-in application for a web browser.

15. The application of any of claims 1 to 14, wherein
the application is configured to determine whether the determined cryptographic algorithm complies with a current standard for the determined cryptographic algorithm based on the cryptographic handshake data and a list of standards for cryptographic algorithms.
